# EUROPÄISCHE PATENTSCHRIFT

(11) **EP 1 843 641 B1**
(45) Veröffentlichungstag und Bekanntmachung des Hinweises auf die Patenterteilung: **16.03.2016**
(21) Anmeldenummer: 07109703.4
(22) Anmeldetag: 25.11.2004
(51) Int. Cl.: H05B 41/282, H05B 37/02, H02J 13/00

(54) **Steuerung von Betriebsgeräten für Leuchtmittel mittels Schaltmodulation eines DC-Busses**
Operation of operating devices for light sources using switch modulation of a DC bus
Commande d'appareils pour sources lumineuses avec modulation de la tension d'un bus DC

(43) Veröffentlichungstag der Anmeldung: 10.10.2007
(62) Teilanmeldung aus: 04028023.2
(73) Patentinhaber: Tridonic GmbH & Co KG, 6851 Dornbirn (AT)
(72) Erfinder: Zudrell-Koch, Stefan, 6845 Hohenems (AT); Huber, Martin, 8854 Siebnen (CH)
(74) Vertreter: Rupp, Christian

(56) Entgegenhaltungen:
- DE-A1- 4 413 569
- US-A- 5 539 388

## Beschreibung

Die vorliegende Erfindung bezieht sich auf die Steuerung von Leuchtmittel-Betriebsgeräten mittels eines DC-Busses am Ausgang einer Zentraleinheit.

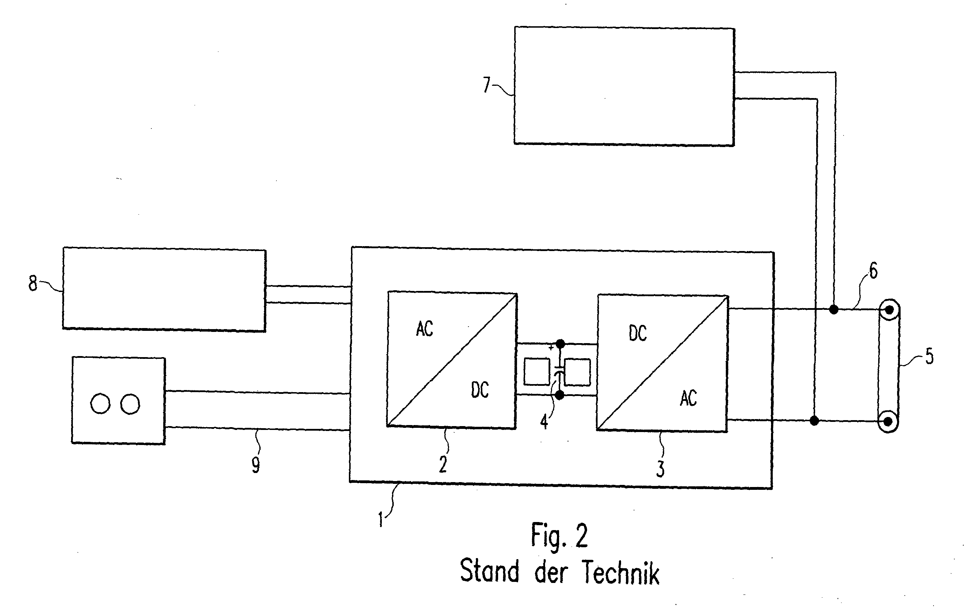

Dabei geht die Erfindung von einem in Fig. 2 schematisch dargestellten System aus. In diesem Beispiel ist das Leuchtmittel eine Gasentladungslampe 5, die von einem elektrischen Vorschaltgerät (EVG) 1 als Betriebsgerät angesteuert wird. In üblicher Weise weist dieses EVG 1 einen Gleichrichter mit Leistungsfaktor-Korrekturschaltung (PFC, Power Factor Correction) 2, einen Elektrolyt-Speicherkondensator 4 sowie einen HF-Wechselrichter 3 auf, der wiederum mittels über seinen Ausgangskreis 6 die Gasentladungslampe 5 ansteuert. Die Gleichspannung (Busspannung) liegt somit nur innerhalb des EVGs vor.

Zusätzlich kann eine Notbeleuchtungssteuerung 7 vorgesehen sein.

Der Gleichrichter 2 in dem EVG 1 wird üblicherweise mit Wechselspannung 9, beispielsweise Netzspannung, versorgt.

Gleichzeitig ist es bekannt, das EVG 1 über eine Digital- oder Analogbussteuerung 8 anzusteuern, um somit die Lampe 5 zu starten, zu dimmen oder auszuschalten. Festzuhalten ist, dass bei diesem Stand der Technik in jedem Lampenbetriebsgerät (EVG 1) ein eigener Gleichrichter 2 mit PFC-Schaltung vorgesehen ist. Eine derartige PFC-Schaltung verringert bekanntlich störende Oberwellen im Eingangsstrom. Andererseits stellen diese lokal in jedem EVG 1 vorgesehenen Wechselrichter mit PFC 2 einen beträchtlichen Kostenfaktor dar, der den Trend zu äußerst kostengünstig gefertigten EVG's stark eingrenzt.

Die DE 44 13 569 A1 offenbart eine Anlage mit einer Zentraleinheit, die über eine Busleitung eine Melde- und Befehlseinheit mittels einer Spannungsversorgung versorgt. Die Melde- und Befehlseinheit versorgt eine Lampe. In bestimmten Zeitfenstern wird die Spannungsversorgung unterbrochen und eine Konstantstromquelle der Zentraleinheit auf den Bus geschaltet. Die Melde- und Befehlseinheit kann Signale senden, indem sie die durch die Konstantstromquelle versorgte Busleitung überbrückt.

Die US 5539388 offenbart eine Telemetrie- und Steuereinheit für Automobile, bei der auf eine DC-Batteriespannung zur Signalübertragung Impulse aufgeschlagen werden.

Ausgangspunkt und Aufgabe für die vorliegende Erfindung ist es dementsprechend, eine Ansteuerung für Leuchtmittel-Betriebsgeräte vorzuschlagen, die eine kostengünstigere Fertigung von Betriebsgeräten ermöglicht.

Zentraler Punkt der Erfindung ist es dabei, dass die Gleichrichtereinheit nicht mehr lokal in jedem Betriebsgeräts, sondern zentral für mehrere Betriebsgeräte vorgesehen ist. Die Verbindung zwischen dieser Zentrale und den einzelnen Betriebsgeräten erfolgt erfindungsgemäß über wenigstens einen DC-Ausgangskreis.

Gleichzeitig soll trotz der zentralen Ausgestaltung eine flexible und auf die Bedürfnisse der angeschlossenen Betriebsgeräte angepasste Versorgung ermöglicht werden.

Die oben angeführte Aufgabe wird durch die Merkmale der unabhängigen Ansprüche gelöst. Die abhängigen Ansprüche bilden den zentralen Gedanken der Erfindung in besonders vorteilhafter Weise weiter.

Weitere Merkmale, Vorteile und Eigenschaften der vorliegenden Erfindung sollen nunmehr unter Bezugnahme auf die Figuren der beigefügten Zeichnungen sowie die folgende detaillierte Beschreibung eines Ausführungsbeispieles näher erläutert werden.
- Fig. 1: zeigt eine schematische Ansicht eines erfindungsgemäßen Steuersystems für Leuchtmittel-Betriebsgeräte mit zentraler Gleichrichter/PFC-Einheit und DC-Ausgangskreis,
- Fig. 2: zeigt eine aus dem Stand der Technik bekannte Betriebsmittel-Ausgestaltung für Gasentladungslampen,
- Fig. 3: zeigt eine schematische Ausführung eines erfindungsgemäßen Steuersystems für Betriebsgeräte für Leuchtmittel mit schaltbarem DC-Bus,
- Fig. 4a und 4b: zeigen einen schematischen Schaltplan bzw. ein Flowchart zur bipolaren Schaltung des DC-Busses, und
- Fig. 5: zeigt ein Ausführungsbeispiel, bei dem der Lastkreis eines an einem DC-Busses angeschlossenen Betriebsgeräts für Leuchtmittel schaltbar ist, um somit eine Rücksignalisierung von dem Betriebsgerät hin zu einer zentralen Gleichrichtereinheit zu ermöglichen.

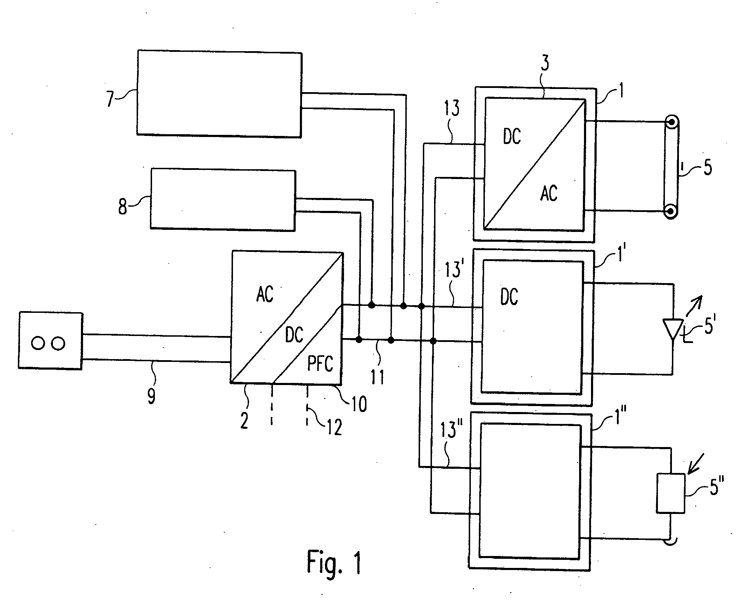

Wie in Fig. 1 gezeigt, ist eine Zentraleinheit, aufweisend beispielsweise einen Gleichrichter 2 sowie ggf. auch eine Leistungsfaktor-Korrekturschaltung (PFC) 10, gemeinsam für mehrere Leuchtmittel-Betriebsgeräte 1, 1', 1" vorgesehen. Die Zentraleinheit 2 wird mit (Netz-)Wechselspannung 9 versorgt. Die Zentraleinheit 2, 10 kann im übrigen auch räumlich von den Betriebsgeräten getrennt sein und bspw. zentral für einen Raum, eine Etage oder gar ein Gebäude in einem Schaltschrank etc. angeordnet werden.

Wie in Fig. 1 schematisch angedeutet, können die verschiedenen Leuchtmittel-Betriebsgeräte 1, 1', 1" verschiedenste Leuchtmittel, wie beispielsweise eine Gasentladungslampe 5, Leuchtdioden 5', etc. ansteuern. Die Leuchtmittel selbst können dabei mit DC- oder mit AC-Spannung betrieben werden, wobei in letzerem Fall in dem zugehörigen Betriebsgerät ein Wechselrichter vorgesehen ist.

Weiterhin können an einen externen DC-Ausgangskreis 11 der Zentraleinheit auch andere (bspw. passive) lichttechnische oder gebäudetechnische Einrichtungen, wie beispielsweise ein Lichtsensor 5" oder ein Bewegungsmelder (nicht dargestellt) angeschlossen sein.

Je nach Natur der angeschlossenen Leuchtmittel 5, 5' bzw. Sensoren 5" sind die Betriebsgeräte 1, 1', 1" unterschiedlich ausgebildet. Für den Fall, dass eine Gasentladungslampe 5 angesteuert werden soll, ist das entsprechende Betriebsgerät 3 bspw. als elektronisches Vorschaltgerät (EVG) u.a. mit einem Wechselrichter ausgebildet. Die Betriebsgeräte können in diesem Fall auch als "Ausgangs-Konverter" bezeichnet werden.

Die Spannungsversorgung der Betriebsgeräte und Leuchtmittel und optional auch die uni- oder bidirektionale Kommunikation zwischen der Zentraleinheit und den lokalen Betriebsgeräten 1, 1', 1" erfolgt über den wenigstens einen (externen) DC-Ausgangskreis 11, 12. "Extern" ist dabei im Gegensatz zu internen DC-Bussen zu verstehen, wie sie bspw. bei bekannten elektronischen Vorschaltgeräten vorliegen.

Wie in Fig. 1 schematisch dargestellt kann dabei ein Ausgangskreis 11 busartig ausgestaltet sein, so dass ausgehend von diesem zentralen gemeinsamen Bus 11 die verschiedenen Betriebsgeräte 1, 1', 1" über Stichleitungen 13, 13', 13" versorgt werden. Alternativ oder zusätzlich können für einzelne Betriebsgeräte bzw. gemeinsam versorgte Gruppen an Betriebsgeräten individuelle Ausgangskreise 12 vorgesehen sein.

Dieser DC-Ausgangskreis hat den Vorteil, dass er im Vergleich zu entsprechenden AC-Kreisen weniger anfällig gegenüber parasitären Effekten ist.

Festzuhalten ist, dass gemäß der vorliegenden Erfindung die Zentraleinheit für mehrere Betriebsgeräte gemeinsam vorgesehen ist, wobei die Zentraleinheit mit den Betriebsgeräten mittels wenigstens einem DC-Ausgangskreis verbunden ist.

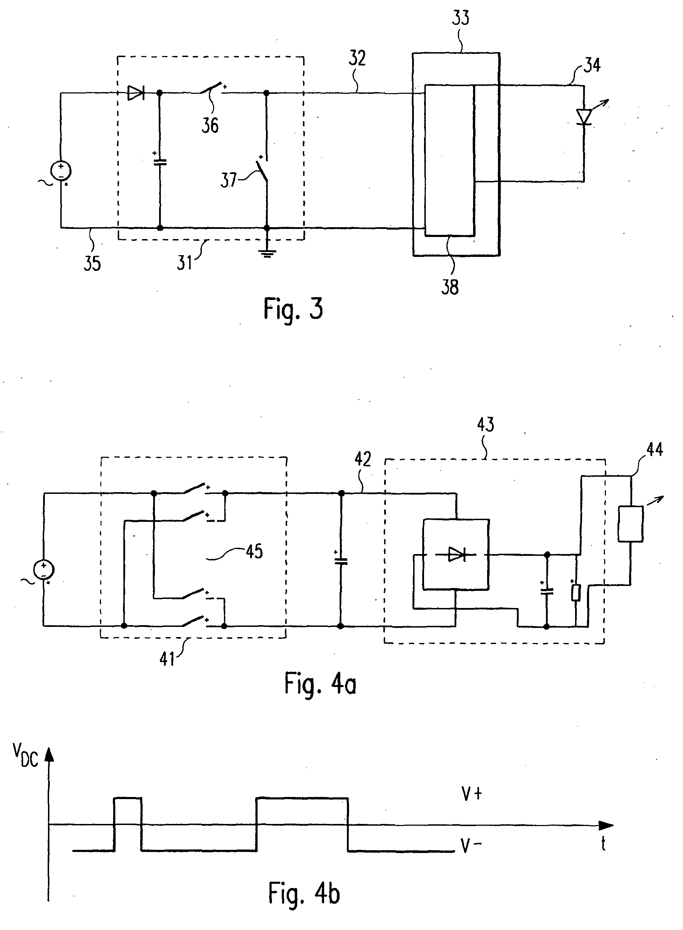

Fig. 3 zeigt schematisch eine zentrale Gleichrichtereinheit 31, die mit Wechselspannung 35 versorgt wird. Diese zentrale Gleichrichtereinheit 31 versorgt über wenigstens einen DC-Ausgangskreis (im folgenden DC-Bus) wenigstens ein Betriebsgerät 33 für Leuchtmittel 34. Dieses Betriebsgerät 33 kann beispielsweise ein elektronisches Vorschaltgerät (EVG) für Gasentladungslampen, oder aber auch ein Steuermodul für LEDs etc. sein. Einem Betriebsgerät können indessen auch andere licht- oder gebäudetechnische Einrichtungen, wie bspw. Bewegungsmelder oder andere aktive oder passive Sensoren zugeordnet sein.

Wie durch die Schalter 36, 37 schematisch dargestellt ist, kann die DC-Spannung des Busses 32 verändert, insbesondere wie in Fig. 3 dargestellt, von einem definierten DC-Pegel auf Null bzw. umgekehrt geschaltet werden. Die Schalter können beispielsweise Leistungstransistoren sein.

Wie im folgenden im Detail erläutert werden wird, kann aber auch allein der Spannungspegel und/oder das Vorzeichen (Polarität) der Spannung des DC-Busses 32 durch die zentrale Gleichrichtereinheit 31 eingestellt (geschaltet) werden.

In dem Betriebsgerät 33 für die Leuchtmittel 34 ist eine Schnittstelle mit Steuereinheit 38 vorgesehen, die die Schaltvorgänge bzgl. der DC-Spannung auswertet (decodiert), als Signale von der zentralen Gleichrichtereinheit 31 her interpretiert und dementsprechend beispielsweise mittels einer lokalen Steuereinheit in dem Betriebsgerät das angeschlossene Leuchtmittel in einen durch den Steuerbefehl vorgegebenen Betriebszustand (Ein, Aus, Dimmen, Start etc.) versetzt.

Vorteilhafterweise erfolgt das Schalten des Pegels des DC-Busses in diskreten Stufen, so dass die lokale Steuereinheit (Logik) 38 in einem an dem DC-Bus angeschlossenen Betriebsgerät 33 für Leuchtmittel 34 diese diskreten Schaltstufen leicht als digitale Schaltbefehle interpretieren kann.

Durch eine diskrete oder kontinuierliche Änderung der (externen) DC-Busspannung kann aber auch analog beispielsweise ein Dimmen der an das Betriebsgerät 33 angeschlossenen Leuchtmittel 34 erzielt werden. Dies entspricht im wesentlichen einem Dimmen von Gasentladungslampen über die interne Bussspannung zwischen dem Gleichrichter und einem Wechselrichter in einem elektronischen Vorschaltgerät (EVG) für Gasentladungslampen.

Falls das Schalten zur Erzeugung digitaler Steuerbefehle dient, kann die Bedeutung der Steuerbefehle beispielsweise durch Schaltvorgänge, die Phasenlage und/oder die Frequenz des Schaltens der Spannung des DC-Busses 32 kodiert sein. Beispielsweise durch die Phasenlage und/oder die Frequenz des Schaltens kann aber auch eine Adressierung eines vorbestimmten Steuerbefehls an ein bzw. eine Gruppe von Betriebsgeräten 33 erfolgen. Selbstverständlich kann die Adressierung eines Steuerbefehls in einfacher Weise auch erzielt werden, wenn in einer Stern-Topologie die zentrale Gleichrichtereinheit 31 mehrere DC-Ausgangskreise 32 bedient, an denen jeweils ein oder eine Gruppe von Betriebsgeräten angeschlossen ist. Falls nicht zusätzlich die einzelnen Steuerbefehle adressiert sind, werden also bei der Stern-Bustopologie alle an einem DC-Ausgangskreis angeschlossenen Betriebsgeräte in gleicher Weise angesprochen.

In Fig. 4a ist ein Ausführungsbeispiel dargestellt, bei dem die Polung der DC-Spannung des Ausgangskreises 42 umgekehrt werden kann. Dementsprechend ist in der zentralen Gleichrichtereinheit 41 eine Vollbrücken-Endstufe 45 vorgesehen, die die Polung einer bereits gleichgerichteten Wechselspannung umkehren kann. Diese Vollbrücken-Endstufe 45 weist in an sich bekannter Weise vier Leistungsschalter (bspw. FETs) auf.

Fig. 4b zeigt ein Beispiel für den zeitlichen Verlauf der DC-Busspannung, die also zwischen einem ersten Pegel +V und eine zweiten Pegel -V umgeschaltet werden kann. Dieses bipolare Schalten eignet sich in besonderer Weise für die Übertragung digitaler Steuerbefehle.

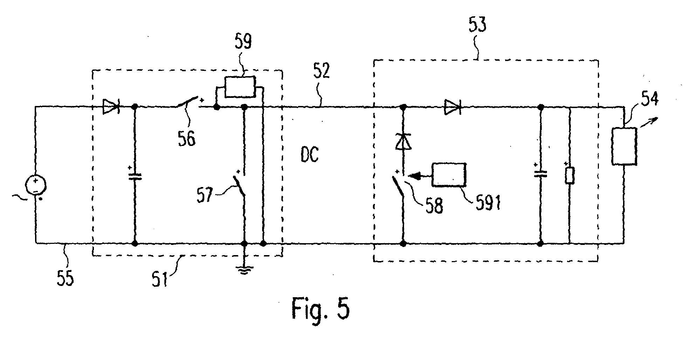

Fig. 5 zeigt ein Ausführungsbeispiel, bei dem alternativ oder zusätzlich zu der Signalübertragung mittels Schaltmodulation des DC-Busses 52 von der zentralen Gleichrichtereinheit 51 hin zu dem Betriebsgerät 53 für Leuchtmittel 54 auch ein Rücksignalisierüngskanal von diesem Betriebsgerät 53 zu der zentralen Gleichrichtereinheit 51 und/oder an weitere an dem DC-Bus 52 angeschlossene Geräte vorgesehen ist.

Diese zentrale Gleichrichtereinheit 51 weist ebenfalls eine schaltbare Endstufe mit Schaltern 56, 57 auf, um den Werde der Spannung des DC-Busses 52 zu verändern

In dem Betriebsgerät 53 für Leuchtmittel 54 ein bspw. mittels eines Leistungstransistors schaltbarer Lastkreis 58 vorgesehen. Durch gezieltes Schalten des Lastkreises 58 ausgehend von einer Steuereinheit (bspw. ein ASIC) 59 in dem Betriebsgerät 53 kann also ausgehend von dem Betriebsgerät 53 gezielt der Lastzustand des DC-Busses 52 verändert werden. Die Zustandsänderung des DC-Busses 52 kann wiederum von einer Überwachungsschaltung 59 in der zentralen Gleichrichtereinheit 51 erfasst werden. Eine entsprechende Vorab-Absprache kann die Änderung des Lastverhaltens des Betriebsgeräts 53 durch die Überwachungsschaltung 59 der zentralen Gleichrichtereinheit 51 als Rücksignalisierung, d.h. als Signalübertragung von dem Betriebsgerät 53 zu der zentralen Gleichrichtereinheit 51 interpretiert werden. Diese Signale können beispielsweise Fehler- oder Betriebszustandsmeldungen von dem Betriebsgerät 53 sein.

Auch diese Rücksignalisierungsbefehle können zur Herkunfts-Identifikation bzw. für die Kennzeichnung der Art der übermittelten Meldungen beispielsweise durch die Phasenlage und/oder die Frequenz der Last-Zustandsänderungen des Betriebsgeräts 53 kodiert sein.

Alternativ kann auch vorgesehen sein, dass gemäß einem Master/Slave-Prinzip die Rücksignalisierung durch Lastzustandsänderung eines Betriebsgeräts 53 für Leuchtmittel 54 nur auf entsprechende Abfrage ausgehend von der zentralen Gleichrichtereinheit 51 hin erfolgt.

Es ist anzumerken, dass in Figuren 3, 4 und 5 jeweils nur die Ausgangsstufe (Endstufe) der zentralen Gleichrichtereinheit dargestellt ist, die den Pegel einer ihr zugeführten Gleichspannung schaltet. Selbstverständlich kann auch diese zentrale Gleichrichtereinheit beispielsweise eine Leistungsfaktor-Korrekturschaltung (PFC, Power Factor Correction) und andere Schaltungen aufweisen, die üblicherweise verwendet werden, um aus einer zugeführten Netzspannung eine DC-Spannung unter Einhaltung üblicher Bestimmungen bspw. bezüglich der Oberwellen des Eingangsstroms zu erzeugen.

Auch wenn im obigen von einer Codierung von Befehlen durch die Phasenlage bzw. die Frequenz von Umschaltvorgängen die Rede war, ist zu verstehen, dass durch die Schaltvorgänge selbst bzw. die Umpolung der Busspannung die Information kodiert werden kann.

Für die Bereitstellung eines Rücksignalisierungskanals durch Änderung des Lastverhaltens von Betriebsgeräten an dem DC-Bus wird erfindungsgemäß die Spannung des DC-Busses von der zentralen Gleichrichtereinheit geregelt.

## Patentansprüche

1. System zur zentralen Steuerung von Betriebsgeräten für Leuchtmittel, aufweisend:
- eine zentrale, mit Wechselspannüng (55) versorgte Gleichrichtereinheit (51),
- wenigstens ein Betriebsgerät (53) für Leuchtmittel (54), und
- einen DC-Bus (52), der ausgehend von der zentralen Gleichrichtereinheit (51) das wenigstens eine Betriebsgerät (53) für Leuchtmittel (54) mit Spannung auf einem definierten Pegel versorgt,
wobei die zentrale Gleichrichtereinheit (51) eine Schaltung (59) zur Überwachung des Zustands des DC-Busses aufweist, die definierte Last-Zustandsänderungen des DC-Busses als Rücksignalisierung von einem Betriebsgerät (53) auswertet,
wobei für die Bereitstellung eines Rücksignalisierungskanals durch Änderung des Lastverhaltens von Betriebsgeräten an dem DC-Bus die Spannung des DC-Busses von der zentralen Gleichrichtereinheit auf den definierten Pegel geregelt ist.

2. System nach Anspruch 1,
**dadurch gekennzeichnet,**
**dass** die Herkunfts-Identifikation und/oder die Art der Rücksignalisierung durch die Phasenlage und/oder die Frequenz der Last-Zustandsänderungen des DC-Busses (52) codiert ist.

3. Verfahren zur zentralen Steuerung von Betriebsgeräten für Leuchtmittel, unter Verwendung:
- einer zentralen mit Wechselspannung versorgte Gleichrichtereinheit,
- wenigstens eines Betriebsgeräts für Leuchtmittel, und
- eines DC-Busses, der ausgehend von der zentralen Gleichrichtereinheit das wenigstens eine Betriebsgerät für Leuchtmittel mit Spannung auf einem definierten Pegel versorgt,
wobei die zentrale Gleichrichtereinheit den Zustand des DC-Busses überwacht, um definierte Last-Zustandsänderungen des DC-Busses als Rücksignalisierung von einem Betriebsgerät auszuwerten,
wobei für die Bereitstellung eines Rücksignalisierungskanals durch Änderung des Lastverhaltens von Betriebsgeräten an dem DC-Bus die Spannung des DC-Busses von der zentralen Gleichrichtereinheit auf den definierten Pegel geregelt wird.

4. Verfahren nach Anspruch 3,
**dadurch gekennzeichnet,**
**dass** die Herkunfts-Identifikation und/oder die Art der Rücksignalisierung durch die Phasenlage und/oder die Frequenz der Last-Zustandsänderungen des DC-Busses codiert wird.

## Claims

1. System for the central control of operating devices for lighting means, having:
- a central rectifier unit (51) supplied with AC voltage (55),
- at least one operating device (53) for lighting means (54), and
- a DC bus (52) that, coming from the central rectifier unit (51), supplies the at least one operating device (53) for lighting means (54) with voltage on a defined level,
wherein the central rectifier unit (51) has a circuit (59) for monitoring the state of the DC bus, that evaluates defined load state changes of the DC bus as return signaling of an operating device (53),
wherein on the DC bus the voltage of the DC bus is regulated by the central rectifier unit on the defined level for providing a return signaling channel by changing the load behavior of operating devices.

2. System according to claim 1, **characterized in that** the origin identification and/or the type of return signaling is coded by the phase position and/or the frequency of the load state changes of the DC bus (52).

3. Method for the central control of operating devices for lighting means, using:
- a central rectifier unit supplied with AC voltage,
- at least one operating device for lighting means, and
- a DC bus that, coming from the central rectifier unit, supplies the at least one operating device for lighting means with voltage on a defined level,
wherein the central rectifier unit monitors the state of the DC bus to evaluate defined load state changes of the DC bus as return signaling of an operating device,
wherein on the DC bus the voltage of the DC bus is regulated by the central rectifier unit on the defined level for providing a return signaling channel by changing the load behavior of operating devices.

4. Method according to claim 3, **characterized in that** the origin identification and/or the type of the return signaling is coded by the phase position and/or the frequency of the load state changes of the DC bus.

## Revendications

1. Système de commande centralisée de dispositifs opérationnels destinés à des moyens d'éclairage, ayant :
- un appareil redresseur centralisé (51) alimenté par une tension alternative (55),
- au moins un appareil (53) destiné à des moyens d'éclairage (54), et
- un bus DC (52) qui, sortant de l'appareil redresseur centralisé (51), alimente l'au moins un dispositif opérationnel (53) destiné aux moyens d'éclairage (54) avec une tension sur un niveau défini,
dans lequel l'appareil redresseur centralisé (51) possède un circuit (59), destiné à surveiller l'état du bus DC, qui évalue des modifications d'état de charge définies du bus DC bus comme une signalisation de retour d'un dispositif opérationnel (53),
dans lequel sur le bus DC, la tension du bus DC est réglée par l'appareil redresseur centralisé sur le niveau défini pour fournir un canal de signalisation de retour en modifiant le comportement sous charge des dispositifs opérationnels.

2. Système selon la revendication 1, **caractérisé en ce que** l'identification d'origine et/ou le type de signalisation de retour est codé par la position de phase et/ou la fréquence des modifications d'état de charge du bus DC (52).

3. Procédé de commande centralisée de dispositifs opérationnels destinés à des moyens d'éclairage, utilisant :
- un appareil redresseur centralisé alimenté par une tension alternative,
- au moins un dispositif opérationnel destiné à des moyens d'éclairage, et
- un bus DC qui, sortant de l'appareil redresseur centralisé, alimente l'au moins un dispositif opérationnel destiné aux moyens d'éclairage avec une tension sur un niveau défini,
dans lequel l'appareil redresseur centralisé surveille l'état du bus DC pour évaluer des modifications d'état de charge définies du bus DC comme une signalisation de retour d'un dispositif opérationnel,
dans lequel sur le bus DC, la tension du bus DC est réglée par l'appareil redresseur centralisé sur le niveau défini pour fournir un canal de signalisation de retour en modifiant le comportement sous charge des dispositifs opérationnels.

4. Procédé selon la revendication 3, **caractérisé en ce que** l'identification d'origine et/ou le type de signalisation de retour est codé par la position de phase et/ou la fréquence des modifications d'état de charge du bus DC.
